# EUROPEAN PATENT APPLICATION

(11) **EP 3 293 835 A1**
(43) Date of publication of application: **14.03.2018**
(21) Application number: 16188231.1
(22) Date of filing: 12.09.2016
(51) Int. Cl.: H01R 13/52, H01R 13/622, G01S 19/35

(54) **WATER-PROOFED CONNECTOR USED FOR GLOBAL POSITIONING SYSTEM SATELLITE NAVIGATION**

(71) Applicant: Tragant Handels- und Beteiligungs GmbH, 14167 Berlin (DE)
(72) Inventor: Ebrahimi, Ahmad, 14167 Berlin (DE)
(74) Representative: Lang, Christian

(57) **Abstract**

A water-proofed connector used for GPS (Global Positioning System) satellite navigation comprises a socket connector and a plug connector. The socket connector includes a socket colloid, a sealed butting column, plural conductive transmission elements and a counter-locking element. The socket colloid is connected with the sealed butting column and each conductive transmission element, whereas the counter-locking element is installed on the socket colloid and is disposed at a periphery of the sealed butting column. The plug connector includes a plug base, a sealed jacket, plural conductive transmission terminals and a locking element. The sealed jacket and each conductive transmission terminal are installed on the plug base, each conductive transmission terminal is disposed inside the sealed jacket and is connected electrically with each conductive transmission element, whereas the sealed jacket is butted with the sealed butting column by attaching tightly. The locking element is installed on the plug base and is locked with the counter-locking element. By connecting the socket connector with the plug connector, the water-proofing effect is achieved.

## Description

### BACKGROUND OF THE INVENTION

### a) Field of the Invention

The present invention relates to a water-proofed connector, and more particularly to a water-proofed connector that is used for GPS (Global Positioning System) satellite navigation.

### b) Description of the Prior Art

For a connector which is used by ordinary satellite navigation equipment, as most of its wiring part is exposed outside, the satellite navigation equipment can be easily damaged to a certain extent by an external effect, such as moisture or water. In particular, the most serious problem to the satellite navigation equipment is the water entering into the satellite navigation equipment. If the satellite navigation equipment is affected by the moisture, then the satellite signal can be unstable and the transportation vehicles which use the satellite navigation equipment or the apparatuses which need to be navigated can be even malfunctioning, causing an irrecoverable regret. Therefore, for most of the connector that is used by the existing satellite navigation equipment, a water-proofed washer is normally used as a water-proofing tool. As the water-proofed washer is made of rubber, the water-proofing effect can be achieved actually and effectively after the water-proofed washer is squeezed by pressure. However, as the satellite navigation equipment which needs the water-proofing function is installed outdoors, the water-proofed washer can be very easily deteriorated such as hardening or embrittlement, when being suffered from a high temperature or being irradiated directly by the sun for a long time. Thus, the connector that is originally equipped with the water-proofing effect will lose the water-proofing function and the accident can still happen if the connector is not checked and replaced on schedule.

The detailed features and advantages of the present invention are described in details hereinafter, with the content being enough to make anyone familiar with the relevant skills to understand the technical content of the present invention and to implement accordingly. In accordance with the content, the claims and the drawings disclosed in this specification, any person skilled in the relevant art can easily understand the related objects and advantages of the present invention.

### SUMMARY OF THE INVENTION

The primary object of the present invention is to provide a water-proofed connector used for GPS satellite navigation, wherein a plug connector is connected electrically to the satellite navigation equipment through a cable, and a socket connector is also connected electrically to a connector through a cable. As the wiring part of the satellite navigation equipment is exposed outdoors, the water-proofing effect can be achieved effectively by butting the water-proofing structure of the plug connector with the water-proofing structure of the socket connector, thereby preventing the satellite navigation equipment from malfunctioning by the moisture.

To achieve the abovementioned object, the present invention discloses a water-proofed connector used for GPS satellite navigation, including a socket connector which is provided with a socket colloid, a sealed butting column, plural conductive transmission elements and a counter-locking element, wherein the socket colloid is connected with the sealed butting column and each conductive transmission element, whereas the counter-locking element is installed on the socket colloid and is disposed at a periphery of the sealed butting column; and a plug connector which is provided with a plug base, a sealed jacket, plural conductive transmission terminals and a locking element, wherein the sealed jacket and each conductive transmission terminal are installed on the plug base, each conductive transmission terminal is disposed inside the sealed jacket and is connected electrically with each conductive transmission element, whereas the sealed jacket is butted with the sealed butting column by attaching tightly. In addition, the locking element is installed on the plug base and is locked with the counter-locking element.

According to an embodiment of the present invention, the sealed butting column is formed with plural butting holes for putting the conductive transmission elements, and each butting hole provides for inserting the conductive transmission terminal in alignment.

According to an embodiment of the present invention, the socket connector is connected with a cable and is connected electrically with a connector.

According to an embodiment of the present invention, the connector is a USB (Universal Serial Bus) 2.0 connector, a USB 3.0 connector, a USB 3.1 connector, a USB type-A connector, a USB type-C connector, a USB type-B connector, a Micro USB connector, a Mini USB connector, an RJ45 (Registered Jack-45) connector, an HDMI (High Definition Multimedia Interface) connector, a Displayport connector, a D-sub connector, an RCA (Radio Corporation of America) connector, a composite connector, an audio connector, a video connector, an AUX (Auxiliary) connector, a Mini-DIN (Deutsches Institut für Normung) connector, a DIN connector, a fiber optical connector, an IDE (Integrated Drive Electronics) connector, a SATA (Serial Advanced Technology Attachment) connector, a serial connector or a parallel connector.

According to an embodiment of the present invention, the plug connector is connected to a cable and is connected electrically to satellite navigation equipment.

According to an embodiment of the present invention, the satellite navigation equipment is applied to a vehicle, a train, a ship or an airplane.

According to an embodiment of the present invention, a front end of the locking element is provided with a water-proofed washer.

To enable a further understanding of the said objectives and the technological methods of the invention herein, the brief description of the drawings below is followed by the detailed description of the preferred embodiments.

### BRIEF DESCRIPTION OF THE DRAWINGS

FIG. 1 shows a three-dimensional schematic view of a socket connector, according to the present invention.
FIG. 2 shows a three-dimensional schematic view of a plug connector, according to the present invention.
FIG. 3 shows a three-dimensional schematic view of the socket connector and the plug connector, according to the present invention.
FIG. 4 shows a cutaway view of assembly of the socket connector with the plug connector, according to the present invention.

### DETAILED DESCRIPTION OF THE PREFERRED EMBODIMENTS

The implementation of the present invention is described hereinafter with specific embodiments, and any person skilled in the relevant art can easily understand the related advantages and benefits of the present invention.

The structure, proportion, size, etc. depicted in the drawings of this specification are only disclosed to match content in the specification for those skilled in the art to understand and read, not intended to limit the implementation of the present invention. Therefore, they have no technical meaning, and any modification in structure, change in proportion or adjustment in size should still fall within the technical content disclosed in the present invention, without affecting the efficacy of the present invention to be generated and the purpose of the present invention to be achieved. Meanwhile, the term cited in this specification as "one", "two", and "upper" etc., only facilitates the clear description, and is not used to limit the range of implementation of the present invention; therefore, the changes or adjustments in the relative relationship are also regarded to be within the scope that the present invention can be implemented, without a substantial change in the technical content.

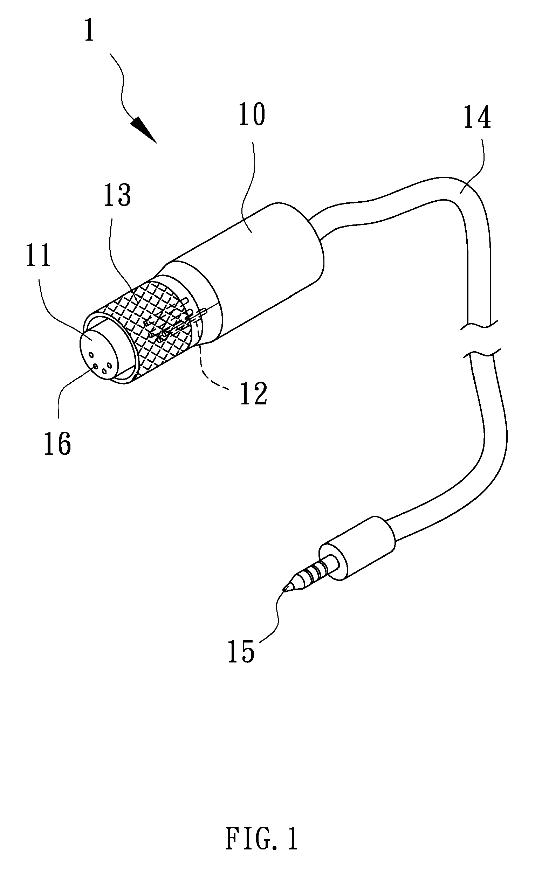

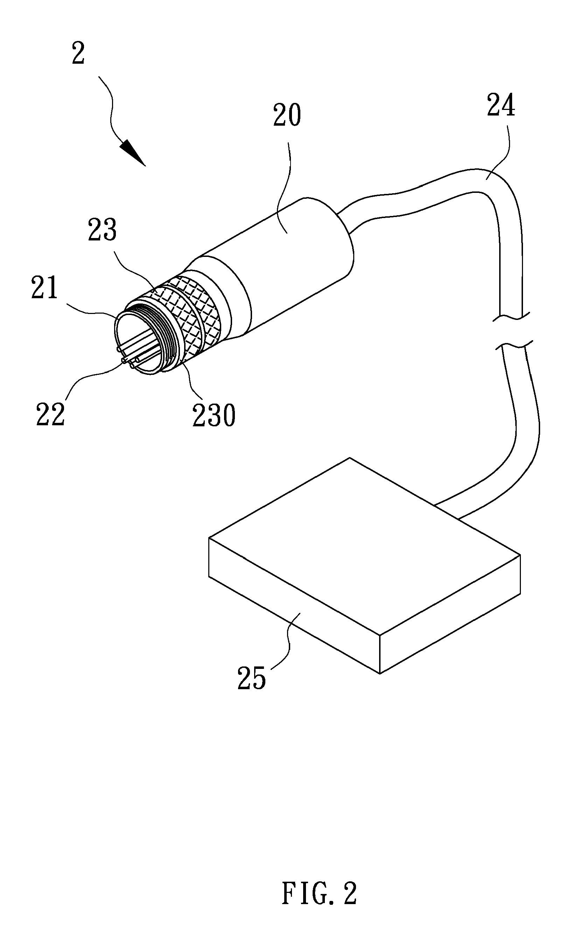

FIGS. 1 to 3 show a three-dimensional schematic view of a socket connector, a three-dimensional schematic view of a plug connector, and a three-dimensional schematic view of the socket connector and the plug connector, according to the present invention. The present invention discloses a water-proofed connector used for GPS satellite navigation, which comprises primarily a socket connector 1 and a plug connector 2. The socket connector 1 includes a socket colloid 10, a sealed butting column 11, plural conductive transmission elements 12 and a counter-locking element 13, wherein the socket colloid 10 is connected with the sealed butting column 11 and each conductive transmission element 12, whereas the counter-locking element 13 is installed on the socket colloid 10 and is disposed at a periphery of the sealed butting column 11. The socket connector 1 is connected with a cable 14 and is connected electrically with a connector 15 which is a USB 2.0 connector, a USB 3.0 connector, a USB 3.1 connector, a USB type-A connector, a USB type-C connector, a USB type-B connector, a Micro USB connector, a Mini USB connector, an RJ45 connector, an HDMI connector, a Displayport connector, a D-sub connector, an RCA connector, a composite connector, an audio connector, a video connector, an AUX connector, a Mini-DIN connector, a DIN connector, a fiber optical connector, an IDE connector, a SATA connector, a serial connector or a parallel connector.

The plug connector 2 includes a plug base 20, a sealed jacket 21, plural conductive transmission terminals 22 and a locking element 23, wherein the sealed jacket 21 and each conductive transmission terminal 22 are installed on the plug base 20, each conductive transmission terminal 22 is disposed inside the sealed jacket 21 and is connected electrically with each conductive transmission element 12, the sealed jacket 21 is butting with the sealed butting column 11 by attaching tightly, whereas the locking element 23 is installed on the plug base 20 and is locked with the counter-locking element 13. In addition, a front end of the locking element 23 is provided with a water-proofed washer 230, and the plug connector 2 is connected with a cable 24 which is connected electrically with satellite navigation equipment 25. This satellite navigation equipment 25 is applied to a vehicle, a train, a ship or an airplane. The sealed butting column 11 of the abovementioned socket connector 1 is formed with plural butting holes 16, and each butting hole 16 provides for putting the conductive transmission element 12 of the socket connector 1. Furthermore, the conductive transmission terminal 22 of the socket connector 2 can be inserted into the butting hole 16 in alignment.

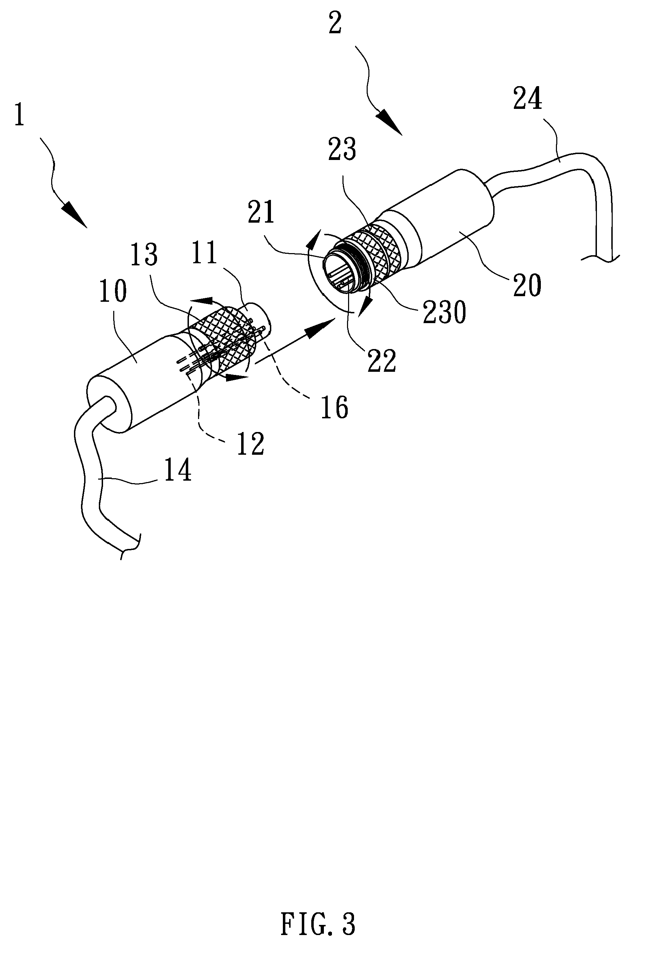

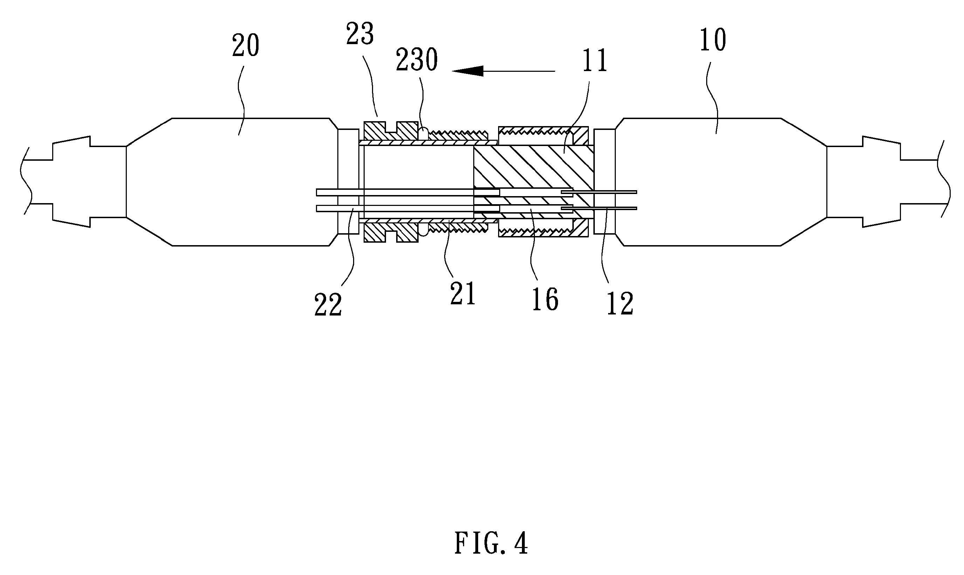

Referring to FIG. 3 and FIG. 4 at a same time, it shows a three-dimensional schematic view of the socket connector and the plug connector, and a cutaway view of assembly of the socket connector with the plug connector, according to the present invention. Upon assembling the socket connector 1 with the plug connector 2, the conductive transmission terminals 22 of the plug connector 2 should first be aligning with the butting holes 16 of the socket connector 1. As the quantity and the location of the butting holes 16 are fixed, the conductive transmission terminals 22 should be aligning with the butting holes 16, otherwise the conductive transmission terminals 22 cannot be inserted into the butting holes 16; and this also achieves the fool-proofing function. When the conductive transmission terminals 22 are inserted into the butting holes 16 and are connected electrically with the conductive transmission elements 12, the sealed butting column 11 of the socket connector 1 must be inserted into the sealed jacket 21 of the plug connector 2 at a same time. As the sealed butting column 11 is tightly attached with the sealed jacket 21, moisture or water can be prevented from entering into the connector. After accomplishing the electrical connection of the conductive transmission elements 12 with the conductive transmission terminals 22, and the assembly of the sealed butting column 11 with the sealed jacket 21, the counter-locking element 13 on the socket colloid 10 is locked with the locking element 23 on the plug base 20 (the direction along which the arrow is rotating is the direction of tightening). Besides that, a front end of the locking element 23 is provided with a water-proofed washer 230. Therefore, when the counter-locking element 13 is locked with the locking element 23, the water-proofed washer 230 can be tightened to achieve a double water-proofing effect.

Accordingly, the plug connector 2 of the present invention is connected electrically with the satellite navigation equipment 25 through the cable 24, and the socket connector 1 is also connected electrically with the connector 15 through the cable 14. As the satellite navigation equipment 25 is applied outdoors, the water-proofing effect can be achieved effectively by butting the water-proofing structure of the plug connector 2 with the water-proofing structure of the socket connector 1, thereby preventing the satellite navigation equipment 25 from malfunctioning by moisture.

It is of course to be understood that the embodiments described herein is merely illustrative of the principles of the invention and that a wide variety of modifications thereto may be effected by persons skilled in the art without departing from the spirit and scope of the invention as set forth in the following claims.

## Claims

1. A water-proofed connector for global positioning system satellite navigation, comprising:
a socket connector 1, which is provided with a socket colloid 10, a sealed butting column 11, plural conductive transmission elements 12 and a counter-locking element 13, wherein the socket colloid 10 is connected with the sealed butting column 11 and each conductive transmission element 12, whereas the counter-locking element 13 is installed on the socket colloid 10 and is disposed at a periphery of the sealed butting column 11; and
a plug connector 2, which is provided with a plug base 20, a sealed jacket 21, plural conductive transmission terminals 22 and a locking element 23, wherein the sealed jacket 21 and each conductive transmission terminal 22 are installed on the plug base 20, each conductive transmission terminal 22 is disposed inside the sealed jacket 21 and is connected electrically with each conductive transmission element 12, whereas the sealed jacket 21 is butted with the sealed butting column 11 by attaching tightly, with that the locking element 23 is installed on the plug base 20 and is locked with the counter-locking element 13.

2. The water-proofed connector used for global positioning system satellite navigation, according to claim 1, wherein the sealed butting column 11 is formed with plural butting holes 16 providing for putting the conductive transmission elements 12, and each butting hole 16 provides for inserting the conductive transmission terminal 22 in alignment.

3. The water-proofed connector used for global positioning system satellite navigation, according to claim 1, wherein the socket connector 1 is connected with a cable 14 and is connected electrically with a connector 15.

4. The water-proofed connector used for global positioning system satellite navigation, according to claim 3, wherein the connector 15 is a USB (Universal Serial Bus) 2.0 connector, a USB 3.0 connector, a USB 3.1 connector, a USB type-A connector, a USB type-C connector, a USB type-B connector, a Micro USB connector, a Mini USB connector, an RJ45 (Registered Jack-45) connector, an HDMI (High Definition Multimedia Interface) connector, a Displayport connector, a D-sub connector, an RCA (Radio Corporation of America) connector, a composite connector, an audio connector, a video connector, an AUX (Auxiliary) connector, a Mini-DIN (Deutsches Institut für Normung) connector, a DIN connector, a fiber optical connector, an IDE (Integrated Drive Electronics) connector, a SATA (Serial Advanced Technology Attachment) connector, a serial connector or a parallel connector.

5. The water-proofed connector used for global positioning system satellite navigation, according to claim 1, wherein the plug connector 2 is connected with a cable 24 and is connected electrically with satellite navigation equipment 25.

6. The water-proofed connector used for global positioning system satellite navigation, according to claim 5, wherein the satellite navigation equipment 25 is applied to a vehicle, a train, a ship or an airplane.

7. The water-proofed connector used for global positioning system satellite navigation, according to claim 1, wherein a front end of the locking element 23 is provided with a water-proofed washer 230.
